# FASCICULE DE BREVET EUROPEEN

(11) **EP 2 339 504 B1**
(45) Date de publication et mention de la délivrance du brevet: **19.12.2012**
(21) Numéro de dépôt: 10192311.8
(22) Date de dépôt: 24.11.2010
(51) Int. Cl.: G06K 7/00, G06K 19/07

(54) **Carte à microcircuit apte à envoyer un signal à un dispositif externe pour prendre l'initiative d'une communication**
IC-Karte, die angepasst ist, um ein Signal an ein externes Gerät zu senden, um eine Kommunikation zu starten
IC card adapted to send a signal to an external device to initiate communication

(30) Priorité: 16.12.2009 FR 0959071
(43) Date de publication de la demande: 29.06.2011
(73) Titulaire: Oberthur Technologies, 92300 Levallois Perret (FR)
(72) Inventeur: Condemine, Olivier, 92300 Levallois-Perret (FR); Lassaoui, Eric, 92300 Levallois-Perret (FR)
(74) Mandataire: Delumeau, François Guy

(56) Documents cités:
- US-A1- 2005 224 588
- US-A1- 2005 252 962
- US-B1- 7 150 407

## Description

### Arrière-plan de l'invention

La présente invention se situe dans le domaine des cartes à microcircuit autrement connues sous le nom de cartes à puce.

Elle s'applique en particulier aux cartes à microcircuit conformes à la norme ISO 7816-3.

Une carte à microcircuit est conçue pour communiquer avec un dispositif externe à cette carte, autrement appelé terminal ou lecteur.

A titre d'exemple non limitatif, les cartes à microcircuit pour application bancaire sont aptes à communiquer avec des terminaux de paiement, et les cartes SIM (Subscriber Identity Module) avec des téléphones mobiles, par exemple conforme à la norme GSM.

La norme ISO 7816-3 définit un standard de communication entre un lecteur et une carte à microcircuit.

Selon cette norme, la communication entre le lecteur et la carte s'effectue en mode semi-duplex, selon un protocole maître/esclave, le maître étant constitué par le dispositif externe et l'esclave par la carte à microcircuit.

Autrement dit, les communications sont à l'initiative du dispositif externe, et la carte à microcircuit ne peut pas prendre l'initiative d'une communication ; la carte à microcircuit est par défaut en mode réception, et ne passe en mode émission que pour répondre à une commande reçue du dispositif externe.

Pour certaines applications, il peut cependant être intéressant de permettre qu'une carte à microcircuit prenne l'initiative d'une communication avec un dispositif externe à cette carte.

Le document US 2005/0252962 décrit une méthode dans laquelle une carte à microcircuit peut, de sa propre initiative, mettre dans un état prédéterminé, une ligne d'entrée/sortie (ou I/O), selon la norme ISO 7816-3, de communication avec un lecteur, afin d'indiquer à ce lecteur qu'elle souhaite communiquer avec lui.

Malheureusement, cette solution n'est pas satisfaisante, car il se peut que le dispositif externe, maître de la communication, décide lui aussi, au moment où la carte à microcircuit met la ligne d'entrée/sortie dans cet état prédéterminé, de mettre la ligne d'entrée/sortie dans ce même état prédéterminé pour envoyer une commande à la carte, générant ainsi une collision.

L'homme du métier comprendra qu'en cas d'une telle collision, la commande émise par le dispositif externe et/ou le signal émis par la carte à microcircuit peut ne pas être correctement reçu ou mal interprété par son destinataire.

L'invention propose une solution qui ne présente pas cet inconvénient.

### Objet et résumé de l'invention

Plus précisément, l'invention concerne une carte à microcircuit comportant des moyens d'envoi à un dispositif externe à cette carte, sur une ligne de communication, pendant une période de silence, d'un signal pour indiquer au dispositif externe qu'elle souhaite communiquer avec ce dispositif externe, ce signal ayant une durée strictement inférieure à la durée minimum de l'information significative la plus courte pouvant être émise par le dispositif externe sur cette ligne de communication selon un protocole normalisé entre la carte et le dispositif externe.

Corrélativement, l'invention concerne un premier procédé de communication pouvant être mis en oeuvre par une carte à microcircuit pour communiquer avec un dispositif externe, ce procédé comportant une étape d'envoi au dispositif externe, sur une ligne de communication, pendant une période de silence, d'un signal pour indiquer au dispositif externe qu'elle souhaite communiquer avec ce dispositif externe, ce signal ayant une durée strictement inférieure à la durée de l'information significative la plus courte pouvant être émise par ledit dispositif externe sur ladite ligne de communication, selon un protocole de communication normalisé entre ladite carte et ledit dispositif externe.

Selon un deuxième aspect, l'invention concerne aussi un dispositif externe à une carte à microcircuit comportant :
- des moyens de réception, sur une ligne de communication, pendant une période de silence, d'un signal d'une durée strictement inférieure à la durée de l'information significative la plus courte pouvant être émise par ce dispositif externe sur cette ligne de communication selon un protocole de communication normalisé entre la carte et le dispositif externe ; et
- des moyens d'envoi, sur réception de ce signal, d'une commande invitant la carte à communiquer.

Corrélativement, l'invention concerne un deuxième procédé de communication, pouvant être mis en oeuvre par un dispositif externe à une carte à microcircuit pour communiquer avec cette carte, ce procédé comportant :
- une étape de réception, sur une ligne de communication, pendant une période de silence, d'un signal d'une durée strictement inférieure à la durée de l'information significative la plus courte pouvant être émise par ce dispositif externe, sur cette ligne de communication, selon un protocole de communication normalisé entre la carte et le dispositif externe ; et
- une étape d'envoi, sur réception de ce signal, d'une commande invitant la carte à communiquer.

Ainsi, conformément à l'invention, le signal émis par la carte étant de durée strictement inférieure à la durée de l'information significative la plus courte pouvant être émise par le dispositif externe, la carte à microcircuit peut toujours détecter au moins une partie de cette information significative, même en cas de collision.

De même, le signal étant émis par la carte à microcircuit pendant un silence, il peut être reçu par le dispositif externe.

Dans un mode particulier de réalisation, la carte à microcircuit selon l'invention comporte des moyens pour écouter la ligne de communication et pour réémettre le signal si elle détecte que cette ligne de communication est occupée. Ce mode particulier de réalisation permet de réémettre le signal immédiatement s'il a été émis pendant que le lecteur tentait de communiquer avec la carte sur ladite ligne.

Dans un mode particulier de réalisation, la carte à microcircuit selon l'invention comporte un détecteur de mouvement, et des moyens de contrôle aptes à commander les moyens d'envoi de la carte pour envoyer le signal précité au dispositif externe sur détection d'un mouvement de ladite carte.

Ce mode particulier de réalisation permet d'offrir des applications embarquées sur la carte à microcircuit et qui se mettent automatiquement en oeuvre, sans délai, lorsqu'un mouvement de la carte est détecté.

Préférentiellement, la carte à microcircuit est conforme à la norme ISO 7816.

Dans une première variante de réalisation de l'invention, le signal est envoyé sur la ligne d'entrée/sortie I/O conforme à la norme ISO 7816-3.

Dans cette variante de réalisation, les moyens d'envoi de la carte à microcircuit selon l'invention sont adaptés à forcer cette ligne d'entrée sortie dans un état déterminé pendant une durée strictement inférieure à l'unité de temps élémentaire définie par la norme ISO 7816-3 pour indiquer au dispositif externe qu'elle souhaite communiquer avec lui. Cette durée élémentaire est notamment la durée nominale d'un bit de départ émise au début de toute commande APDU émise par le dispositif externe.

De façon connue, la norme ISO 7816-3 prévoit une tolérance de 20% pour la durée d'émission de ce bit de départ par le dispositif externe, autour de cette durée nominale.

Par conséquent, dans un mode particulier de réalisation, les moyens d'envoi de la carte à microcircuit sont adaptés à forcer la ligne d'entrée/sortie I/O dans l'état déterminé précité pendant une durée inférieure à 0,8 fois l'unité de temps élémentaire. Cette caractéristique permet d'éviter qu'une collision ne soit dommageable, même si celle-ci se produit avec un bit de départ de la durée la plus courte acceptable.

Par exemple, on choisit une durée environ égale à 0,5 fois l'unité de temps élémentaire, cette valeur constituant un bon compromis entre le risque d'interpréter à tort le signal comme un parasite ou une attaque et le risque de confondre ce signal avec une information significative émise par le dispositif externe.

Dans une deuxième variante de réalisation de l'invention, le signal est envoyé sur une ligne de contact RST conforme à la norme ISO 7816-3.

Dans cette variante de réalisation, les moyens d'envoi de la carte à microcircuit selon l'invention sont adaptés à forcer la ligne de contact RST dans un état déterminé pendant une durée strictement inférieure à la durée du RESET normalisée par la norme ISO 7816-3.

Par exemple, cette durée peut être choisie environ égale à 100 cycles d'une horloge externe à la carte à microcircuit, la durée du RESET définie par la norme ISO 7816-3 étant de 400 cycles d'horloge.

Dans un mode particulier de cette deuxième variante de réalisation, la carte à microcircuit l'invention comporte :
- des moyens pour déconnecter l'entrée de la ligne de contact RST lorsqu'elle force la ligne de contact RST dans l'état déterminé ; et
- des moyens pour réagir à un signal RST d'une durée inférieure à la durée normalisée du signal RST diminuée de la durée pendant laquelle les moyens d'envoi forcent la ligne de contact RST dans l'état déterminé.

Cette caractéristique permet avantageusement d'éviter que la carte à microcircuit n'interprète son propre signal comme un signal RESET émise par le dispositif externe.

Conformément à l'invention, lorsque le dispositif externe reçoit le signal émis par la carte à microcircuit, il lui envoie une commande pour l'inviter à communiquer. Il peut par exemple s'agir d'une commande APDU conforme à la norme ISO 7816-3, préférentiellement de type STATUS.

Dans un mode particulier de réalisation, la carte à microcircuit selon l'invention comporte des moyens pour indiquer au dispositif externe, qu'elle possède la capacité à émettre le signal précité.

Corrélativement, dans un mode particulier de réalisation, le dispositif selon l'invention comporte des moyens pour indiquer à la carte à microcircuit qu'il possède la capacité à traiter ce signal.

Par exemple, la carte à microcircuit et le dispositif selon l'invention mettent en oeuvre le protocole PPS connu de l'homme du métier (Protocol Parameter Selection) pour s'informer mutuellement de leurs capacités à émettre et à traiter ce signal.

Dans un autre mode de réalisation, la carte à microcircuit selon l'invention comporte des moyens pour envoyer une réponse de type ATR (Answer to Reset) conforme à la norme ISO 7816-3, cette réponse comportant une information représentative du fait que ladite carte possède la capacité à émettre ce signal.

Dans un autre mode de réalisation, le dispositif selon l'invention envoie à la carte à microcircuit une commande APDU conforme à la norme ISO 7816-3, cette commande comportant une information représentative du fait que ce dispositif possède la capacité à traiter ce signal, la carte à microcircuit répondant à cette commande APDU par une réponse comportant une information représentative du fait que la carte possède la capacité à émettre ce signal.

Dans un mode particulier de réalisation, les différentes étapes des procédés de communication mentionnés ci-dessus sont déterminées par des instructions de programmes d'ordinateurs.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente une carte à microcircuit conforme à un mode particulier de réalisation de l'invention ;
- la figure 2 représente un dispositif externe à une carte à microcircuit conforme à un mode particulier de réalisation de l'invention ;
- la figure 3 représente une commande APDU conforme à l'état de la technique ;
- la figure 4 représente un exemple de signal pouvant être émis par la carte à microcircuit de la figure 1 dans un mode particulier de réalisation de l'invention ; et
- la figure 5 représente, sous forme d'organigramme, les principales étapes des procédés selon l'invention, dans un mode particulier de réalisation.

### Description détaillée d'un mode de réalisation

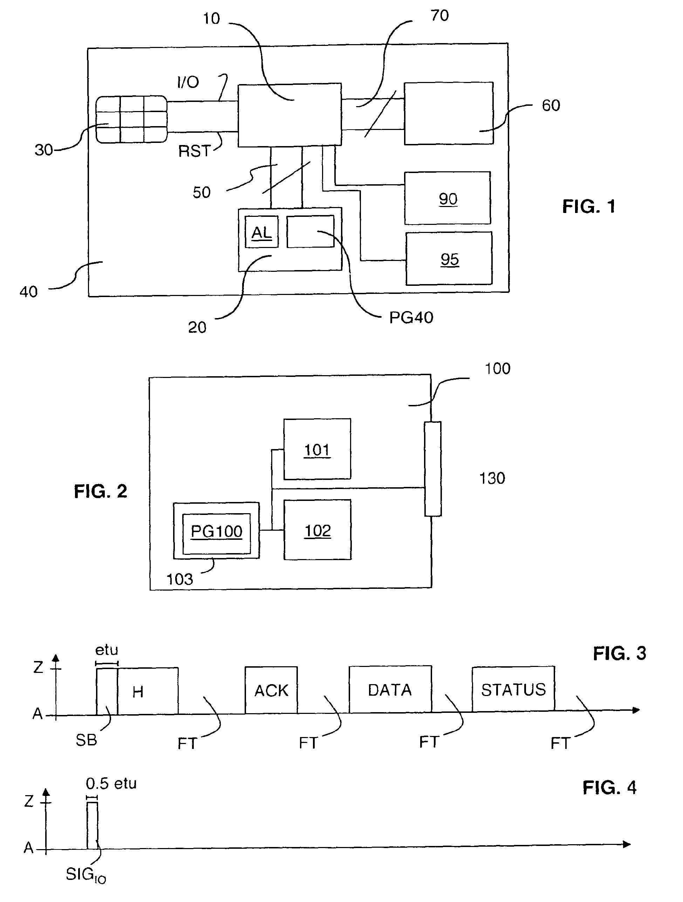

La figure 1 représente une carte à microcircuit 40 conforme à l'invention.

Cette carte à microcircuit 40 comporte un microprocesseur 10, apte à accéder d'une part à une mémoire vive 60 au moyen d'un bus 70, et d'autre part à une mémoire non volatile 20 (par exemple du type EEPROM) au moyen d'un bus 50.

Cette carte à microcircuit est conforme à la norme ISO 7816 ; elle comporte un microcontrôleur sécurisé qui regroupe le microprocesseur (ou CPU) 10 et la mémoire vive 60.

Cette carte à microcircuit 40 comporte également un accéléromètre 90 apte à détecter un mouvement de la carte à microcircuit 40.

La carte à microcircuit 40, ou plus précisément le microprocesseur 10, peut échanger des données avec un dispositif externe 100 représenté figure 2 au moyen d'une interface de communication 30 constituée de contacts.

Sur la figure 1, on a représenté deux lignes de contact particulières, à savoir :
- une ligne RST de RESET ; et
- une ligne d'entrée/sortie I/0,

Conformément à la norme ISO 7816-3, la ligne RST de RESET est utilisée, de façon unidirectionnelle, par le dispositif externe 100 pour réinitialiser la carte à microcircuit 40. La durée normalisée du signal de RESET est de 400 cycles d'horloge externe.

Conformément à la norme ISO 7816-3, la ligne I/O d'entrée sortie est utilisée par échanger, dans les deux sens, des informations entre le dispositif externe 100 et la carte à microcircuit 40. Ces informations sont échangées selon un protocole maître/esclave dans lequel le maître est constitué par le dispositif externe 100 et l'esclave par la carte à microcircuit 40.

A titre d'exemple, la figure 3 représente une commande APDU pouvant être échangée sur la ligne d'entrée/sortie I/O. Il apparaît sur cette figure que la ligne d'entrée/sortie I/O peut prendre deux états, à savoir un état Z de haute impédance (repos ou état haut prenant la valeur VCC) et un état A (travail ou état bas, prenant la valeur OV).

Cette commande APDU comporte, de façon classique :
- un en-tête H émis par le dispositif externe 100. Conformément à la norme ISO 7816-3, l'entête H commence par un bit de départ SB (en start-bit) d'une durée unitaire etu ;
- un accusé de réception ACK émis par la carte à microcircuit 40 ;
- éventuellement des données DATA émises par la carte à microcircuit 40 ou par le dispositif externe 100 ;
- éventuellement des informations d'état STATUS émises par la carte à microcircuit 40.

Cette commande APDU comporte des fenêtres de silence FT.

Conformément à l'invention, ces fenêtres de silence peuvent être utilisées par la carte à microcircuit 40 pour envoyer, sur la ligne d'entrée sortie I/O, un SIG_{IO} au dispositif externe 100 pour prendre l'initiative d'un échange de données.

Nous supposerons, dans l'exemple détaillé qui décrit ici, que la carte à microcircuit 40 est pour indiquer au lecteur 100 qu'elle souhaite communiquer :
- soit à émettre un signal SIG_{R} d'une durée de 100 cycles sur la ligne de contact RST _{;}
- soit à émettre un signal SIG_{IO} d'une durée de 0,5 etu sur la ligne d'entrée/sortie I/0.

De façon avantageuse, la carte à microcircuit 40 comporte, dans cet exemple de réalisation, une résistance de pull-up non représentée pour protéger la ligne de contact RST d'un éventuel court-circuit.

La figure 4 représente un tel signal SIG_{IO}. Il est remarquable de noter que la durée de ce signal SIG_{IO} est strictement inférieure à la durée unitaire etu. Dans cet exemple, cette durée égale 0.5 etu.

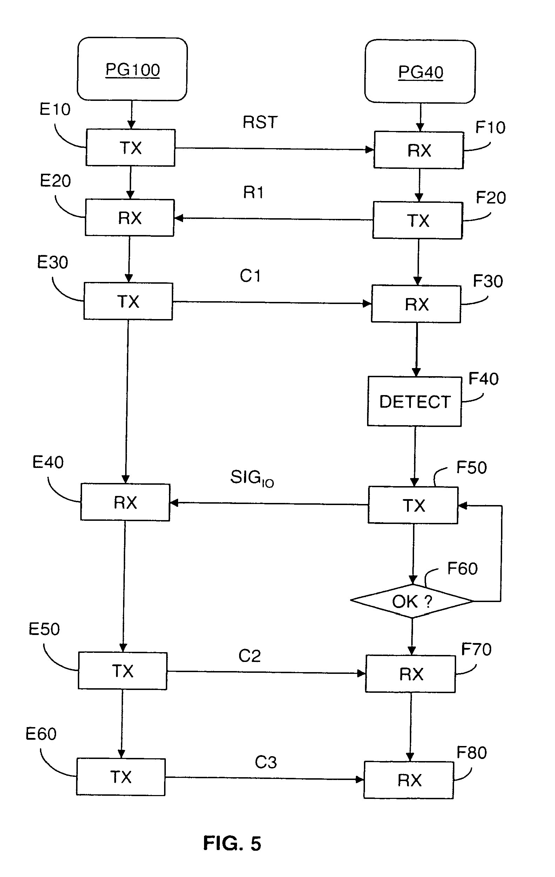

La mémoire non volatile 20 de la carte à microcircuit 40 constitue un support d'informations conforme à l'invention. Elle comporte un programme d'ordinateur PG40 conforme à l'invention, ce programme comportant des instructions apte à mettre en oeuvre un procédé de communication conforme à l'invention dont les principales étapes F10 à F80 sont représentées sous forme d'organigramme à la figure 5.

En référence à la figure 2, le dispositif 100 externe à la carte à microcircuit 40 présente, dans cet exemple, l'architecture matérielle d'un ordinateur. Il comporte notamment un processeur 101, une mémoire vive de type RAM 102, une mémoire morte de type ROM 103, et un connecteur 130 compatible avec les contacts 30 de la carte à microcircuit 40..

La mémoire morte de type ROM 103 constitue un support d'informations conforme à l'invention. Elle comporte un programme d'ordinateur PG100 conforme à l'invention, ce programme comportant des instructions apte à mettre en oeuvre un procédé de communication et dont les principales étapes E10 à E60 sont représentées sous forme d'organigramme à la figure 5.

Nous supposerons, dans l'exemple détaillé qui décrit ici, que le dispositif externe 100 est apte à recevoir et traiter un signal SIG,IO émis sur la ligne d'entrée/sortie I/O, mais qu'en revanche il ne sait pas traiter un signal SIG_{R} émis par la carte sur la ligne de contact RST.

En référence à la figure 5, nous allons maintenant décrire un mode particulier de mise en oeuvre de l'invention.

Nous supposerons dans cet exemple que le dispositif externe 100 émet une commande de réinitialisation RESET sur la ligne RST au cours d'une étape E10. Cette commande est détectée au cours d'une étape F10 du procédé de communication mis en oeuvre par la carte à microcircuit 40.

La carte à microcircuit 40 répond à cette commande de réinitialisation en envoyant, au cours d'une étape F20, une réponse de type ATR (Answer to Reset). Cette réponse est reçue par le dispositif externe 100 au cours d'une étape E20 de son procédé de communication. Cette réponse ATR comporte une information selon laquelle la carte à microcircuit 40 est apte à envoyer, lorsqu'elle souhaite indiquer au lecteur 100 qu'elle souhaite communiquer :
- un signal SIG_{IO} de durée 0.5 etu sur la ligne de communication I/O ; ou ;
- un signal SIG_{R} de 100 cycles d'horloge externe la ligne de communication RST.

Dans l'exemple de réalisation décrit ici, le dispositif externe envoie, au cours d'une étape E30, une commande APDU C1 pour indiquer à la carte à microcircuit 40 qu'il sait traiter le signal signal SIG_{IO} mais qu'il ne sait pas traiter le signal SIG_{R}. Cette commande C1 est reçue par la carte à microcircuit au cours d'une étape F30.

Nous supposerons que l'accéléromètre 90 détecte un mouvement de la carte à microcircuit 40 au cours d'une étape F40 et que la carte à microcircuit comporte une application logicielle AL qui souhaite communiquer avec le lecteur 100 dès une telle détection.

Dans le mode de réalisation décrit ici, la carte à microcircuit 40 décide d'envoyer immédiatement un signal SIG_{IO} au dispositif externe 100 pour lui indiquer qu'elle souhaite communiquer. Pour cela elle attend un silence FT sur la ligne d'entrée/sortie I/0 et dès qu'elle perçoit ce silence, elle émet, au cours d'une étape F50, le signal SIG,IO sur la ligne d'entrée/sortie I/O. On notera que ce signal peut être émis même si la carte est en mode de consommation réduit (SUSPEND).

Ce signal est reçu par le dispositif externe 100 au cours d'une étape E40.

Dans le mode de réalisation décrit ici, la carte à microcircuit 40 vérifie, au cours d'une étape F60, que le signal SIG_{IO} a bien été reçu par le dispositif externe 100. Dans le mode de réalisation décrit ici, cette étape consiste à vérifier si elle reçoit une commande APDU de type STATUS dans un délai prédéterminé compté à partir de l'émission de ce signal SIG_{IO}. Si tel n'est pas le cas, elle réémet le signal SIG_{IO}.

Dans le mode de réalisation décrit ici, le dispositif externe 100 envoie, si nécessaire, au cours d'une étape E50, une commande C2 à la carte à microcircuit 40 pour lui faire quitter le mode de consommation réduite. Cette commande C2 est reçue par la carte à microcircuit au cours d'une étape F70.

Puis, au cours d'une étape E60, le dispositif externe envoie une commande C3 à la carte à microcircuit 40 pour l'inviter à communiquer. Dans l'exemple de réalisation décrit ici, il s'agit d'une commande STATUS. Cette commande est reçue par la carte au cours d'une étape F80.

La carte à microcircuit 40 peut ensuite envoyer des données au dispositif externe 100 comme de façon connue.

## Revendications

1. Carte à microcircuit (40) comportant des moyens (10, 30) d'envoi à un dispositif (100) externe à ladite carte, sur une ligne de communication I/O, RST), pendant une période de silence (FT), d'un signal (SIG_{R}, SIG_{IO}) pour indiquer audit dispositif externe (100) que ladite carte (40) souhaite communiquer avec ledit dispositif externe (100), **caractérisée en ce que** dit signal (SIG_{R}, SIG_{IO}) a une durée strictement inférieure à la durée de l'information significative la plus courte pouvant être émise par ledit dispositif externe (100) sur ladite ligne de communication (I/O, RST) selon un protocole normalisé entre ladite carte et ledit dispositif externe.

2. Carte à microcircuit selon la revendication 1, **caractérisée en ce qu'**elle comporte un détecteur de mouvement (90), et des moyens (10) de contrôle aptes à commander lesdits moyens d'envoi (10, 30) pour envoyer ledit signal (SIG_{R}, SIG_{IO}) sur détection d'un mouvement de ladite carte (40).

3. Carte à microcircuit selon la revendication 1 ou 2, **caractérisée en ce que** ladite carte (40) est conforme à la norme ISO 7816 et **en ce que** ladite ligne (I/O) est une ligne d'entrée sortie conforme à la norme ISO 7816-3.

4. Carte à microcircuit selon la revendication 3, **caractérisée en ce que** lesdits moyens d'envoi (10, 30) sont adaptés à forcer ladite ligne d'entrée sortie (I/O) dans un état déterminé (A) pendant une durée strictement inférieure à une unité de temps élémentaire (etu) au sens de la norme ISO 7816-3 pour indiquer audit dispositif externe (100) qu'elle souhaite communiquer avec lui.

5. Carte à microcircuit selon la revendication 4, **caractérisée en ce que** lesdits moyens d'envoi (10, 30) sont adaptés à forcer ladite ligne d'entrée sortie dans ledit état déterminé pendant une durée inférieure à 0,8 fois ladite unité de temps élémentaire (etu), préférentiellement pendant une durée environ égale à 0,5 fois ladite unité de temps élémentaire (etu).

6. Carte à microcircuit selon la revendication 1 ou 2, **caractérisée en ce que** ladite carte (40) est conforme à la norme ISO 7816 et **en ce que** ladite ligne (RST) est une ligne de contact RST conforme à la norme ISO 7816-3.

7. Carte à microcircuit selon la revendication 6, **caractérisée en ce que** lesdits moyens d'envoi (10, 30) sont adaptés à forcer ladite ligne de contact RST dans un état déterminé pendant une durée strictement inférieure à la durée normalisée du RESET par la norme ISO 7816-3, préférentiellement pendant une durée environ égale à 100 cycles d'une horloge externe à ladite carte.

8. Carte à microcircuit selon la revendication 6 ou 7, **caractérisée en ce qu'**elle comporte :
- des moyens (20) pour déconnecter l'entrée de ladite ligne de contact RST lorsqu'elle force ladite ligne de contact RST dans ledit état déterminé ; et
- des moyens pour réagir à un signal RST d'une durée inférieure à ladite durée normalisée diminuée de ladite durée pendant laquelle lesdits moyens d'envoi forcent ladite ligne de contact RST dans ledit état déterminé.

9. Carte à microcircuit selon l'une quelconque des revendications 1 à 8, **caractérisée en ce qu'**elle comporte des moyens (10, 30) pour indiquer audit dispositif externe, qu'elle possède la capacité à émettre ledit signal.

10. Carte à microcircuit selon la revendication 9, **caractérisée en ce qu'**elle comporte des moyens (10, 30) pour envoyer une réponse (R1) de type ATR conforme à la norme ISO 7816-3, ladite réponse (R1) comportant une information représentative du fait que ladite carte possède la capacité à émettre ledit signal.

11. Carte à microcircuit selon la revendication 9, **caractérisée en ce qu'**elle comporte des moyens (10, 30) pour répondre à une commande APDU conforme à la norme ISO 7816-3, ladite réponse comportant une information représentative du fait que ladite carte possède la capacité à émettre ledit signal (SIG_{R}, SIG_{IO}).

12. Carte à microcircuit selon la revendication 11, **caractérisée en ce qu'**elle comporte des moyens (10) pour écouter ladite ligne de communication (I/O, RST) et pour réémettre ledit signal (SIG_{R}, SIG_{IO}) si elle détecte que ladite ligne de communication (I/O, RST) est occupée.

13. Carte à microcircuit selon l'une quelconque des revendications 1 à 12, **caractérisée en ce qu'**elle comporte des moyens (10) pour mettre en oeuvre le protocole PPS pour indiquer audit dispositif externe (100) qu'elle possède la capacité à émettre ledit signal (SIG_{R}, SIG_{IO}).

14. Dispositif externe à une carte à microcircuit comportant :
- des moyens (101, 130) de réception, sur une ligne de communication, pendant une période de silence (FT), d'un signal (SIG_{R}, SIG_{IO}) **caractérisé en ce que** ledit signal a une durée strictement inférieure à la durée de l'information significative la plus courte pouvant être émise par ledit dispositif externe sur ladite ligne de communication, selon un protocole de communication normalisé entre ladite carte et ledit dispositif externe ; et
- des moyens (101, 130) d'envoi, sur réception dudit signal (SIG_{R}, SIG_{IO}), d'une commande (C3) invitant ladite carte à communiquer.

15. Dispositif selon la revendication 14, **caractérisé en ce qu'**il comporte des moyens pour envoyer une commande APDU conforme à la norme ISO 7816-3, préférentiellement de type STATUS, pour inviter ladite carte à communiquer.

16. Dispositif selon la revendication 14 ou 15, **caractérisé en ce qu'**il comporte des moyens (101, 130) pour indiquer à ladite carte à microcircuit qu'il possède la capacité à traiter ledit signal.

17. Dispositif selon la revendication 16, **caractérisé en ce qu'**il comporte des moyens pour envoyer une commande APDU (C1) conforme à la norme ISO 7816-3, ladite commande (C1) comportant une information représentative du fait que ledit dispositif possède la capacité à traiter ledit signal.

18. Dispositif selon la revendication 17, **caractérisé en ce qu'**il comporte des moyens pour mettre en oeuvre le protocole PPS pour indiquer à ladite carte à microcircuit qu'il possède la capacité à traiter ledit signal.

19. Procédé de communication, pouvant être mis en oeuvre par une carte à microcircuit pour communiquer avec un dispositif externe, comportant une étape (F50) d'envoi audit dispositif externe, sur une ligne de communication, pendant une période de silence (FT), d'un signal (SIG_{R}, SIG_{IO}) pour indiquer audit dispositif externe que ladite carte à microcircuit souhaite communiquer avec ledit dispositif externe, **caractérisé en ce que** ledit signal a une durée strictement inférieure à la durée de l'information significative la plus courte pouvant être émise par ledit dispositif externe sur ladite ligne de communication, selon un protocole de communication normalisé entre ladite carte et ledit dispositif externe.

20. Procédé de communication, pouvant être mis en oeuvre par un dispositif externe à une carte à microcircuit pour communiquer avec ladite carte comportant:
- une étape (E40) de réception, sur une ligne de communication, pendant une période de silence, d'un signal (SIG_{R}, SIG_{IO}) **caractérisé en ce que** le dit signal a une durée strictement inférieure à la durée de l'information significative la plus courte pouvant être émise par ledit dispositif externe sur ladite ligne de communication, selon un protocole de communication normalisé entre ladite carte et ledit dispositif externe ; et
- une étape (E60) d'envoi, sur réception dudit signal (SIG_{R}, SIG_{IO}), d'une commande (C3) invitant ladite carte à communiquer.

## Claims

1. A microcircuit card (40) comprising means (10, 30) for sending to a device (100) external to said card, over a communication line (I/O, RST) and during a period of silence (FT), a signal (SIG_{R}, SIG_{IO}) to indicate to said external device (100) that said card (40) wishes to communicate with said external device (100), **characterized in that** said signal (SIG_{R}, SIG_{IO}) has a duration strictly less than the duration of the shortest significant data item able to be emitted by said external device (100) over said communication line (I/O, RST) in accordance with a standardized protocol between said card and said external device.

2. The microcircuit card according to claim 1, **characterized in that** it comprises a movement detector (90), and control means (10) capable of controlling said sending means (10, 30) to send said signal (SIG_{R}, SIG_{IO} on detection of a movement of said card (40).

3. The microcircuit card according to claim 1 or 2, **characterized in that** said card (40) conforms to standard ISO 7816 and **in that** said line (I/O) is an input/output line conforming to standard ISO 7816-3.

4. The microcircuit card according to claim 3, **characterized in that** said sending means (10, 30) are adapted to force said input/output line (I/O) into a determined state (A) for a time strictly less than an elementary time unit (etu) in the meaning of standard ISO 7816-3 to indicate to said external device (100) that it wishes to communicate therewith.

5. The microcircuit card according to claim 4, **characterized in that** said sending means (10, 30) are adapted to force said input/output line into said determined state for a time shorter than 0.8 times said elementary time unit (etu), preferably for a time equal to about 0.5 times said elementary time unit (etu).

6. The microcircuit card according to claim 1 or 2, **characterized in that** said card (40) conforms to standard ISO 7816 and **in that** said line (RST) is a RST contact line conforming to standard ISO 7816-3.

7. The microcircuit card according to claim 6, **characterized in that** said sending means (10, 30) are adapted to force said contact line RST into a determined state for a time strictly less than the standardized RESET time as per standard ISO 7816-3, preferably for a time equal to about 100 cycles of a clock external to said card.

8. The microcircuit card according to claim 6 or 7, **characterized in that** it comprises:
- means (20) for disconnecting the input of said RST contact line when it forces said RST contact line into said determined state; and
- means for reacting to a RST signal of duration shorter than said standardized time less said duration during which said sending means force said RST contact line into said determined state.

9. The microcircuit card according to any of claims 1 to 8, **characterized in that** it comprises means (10, 30) to indicate to said external device that it has the capability to emit said signal.

10. The microcircuit card according to claim 9, **characterized in that** it comprises means (10, 30) to send a response (R1) of ATR type conforming to standard ISO 7816-3, said response (R1) comprising information representing the fact that said card has the capability to emit said signal.

11. The microcircuit card according to claim 9, **characterized in that** it comprises means (10, 30) for answering a APDU command conforming to standard ISO 7816-3, said answer comprising information representing the fact that said card has the capability to emit said signal (SIG_{R}, SIG_{IO}).

12. The microcircuit card according to claim 11, **characterized in that** it comprises means (10) to listen to said communication line (I/O, RST) and to re-emit said signal (SIG_{R}, SIG_{IO}) if it detects that said communication line (I/O, RST) is engaged.

13. The microcircuit card according to any of claims 1 to 12, **characterized in that** it comprises means (10) for implementing the PPS protocol to indicate to said external device (100) that it has the capability to emit said signal (SIG_{R}, SIG_{IO}).

14. A device external to a microcircuit card comprising:
- means (101, 130) for receiving, over a communication line and during a period of silence (FT), a signal (SIG_{R}, SIG_{IO}) **characterized in that** said signal has a duration strictly less than the duration of the shortest significant data item able to be emitted by said external device over said communication line in accordance with a standardized communication protocol between said card and said external device; and
- means (101, 130), on reception of said signal (SIG_{R}, SIG_{IO}), for sending a command (C3) inviting said card to communicate.

15. The device according to claim 14, **characterized in that** it comprises means for sending a APDU command conforming to standard ISO 7816-3, preferably of STATUS type, to invite said card to communicate.

16. The device according to claim 14 or 15, **characterized in that** it comprises means (101, 130) for indicating to said microcircuit card that it has the capability to process said signal.

17. The device according to claim 16, **characterized in that** it comprises means for sending a APDU command (C1) conforming to standard ISO 7816-3, said command (C1) comprising information representing the fact that said device has the capability to process said signal.

18. The device according to claim 17, **characterized in that** it comprises means for implementing the PPS protocol to indicate to said microcircuit card that it has the capability to process said signal.

19. A communication method able to be implemented by a microcircuit card to communicate with an external device, comprising a step (F50) to send to said external device over a communication line and during a period of silence (FT) a signal (SIG_{R}, SIG_{IO}) to indicate to said external device that said microcircuit card wishes to communicate with said external device, **characterized in that** said signal has a duration strictly less than the duration of the shortest significant data item able to be emitted by said external device over said communication line in accordance with a standardized communication protocol between said card and said external device.

20. A communication method able to be implemented by a device external to a microcircuit card to communicate with said card, comprising:
- a step (E40) to receive a signal (SIG_{R}, SIG_{IO}) , over a communication line and during a period of silence, **characterized in that** said signal has a duration strictly less than the duration of the shortest significant data item able to be emitted by said external device over said communication line, in accordance with a standardized communication protocol between said card and said external device; and
- a step (E60), on receipt of said signal (SIG_{R}, SIG_{IO}), to send a command (C3) inviting said card to communicate.

## Patentansprüche

1. Karte mit Mikroschaltkreis (40), umfassend Mittel (10, 30) zum Senden eines Signals (SIG_{R}, SIG_{IO}) an eine Vorrichtung (100) außerhalb der Karte, über eine Kommunikationsleitung (I/O, RST), während einer Ruhezeit (FT), um der externen Vorrichtung (100) anzuzeigen, daß die Karte (40) mit der externen Vorrichtung (100) kommunizieren möchte, **dadurch gekennzeichnet, daß** das Signal (SIG_{R}, SIG_{IO}) eine Dauer hat, die strikt geringer ist als die Dauer der kürzesten signifikanten Information, die durch die externe Vorrichtung (100) über die Kommunikationsleitung (I/O, RST) nach einem genormten Protokoll zwischen der Karte und der externen Vorrichtung gesendet werden kann.

2. Karte mit Mikroschaltkreis nach Anspruch 1, **dadurch gekennzeichnet, daß** sie einen Bewegungsdetektor (90) sowie Steuermittel (10) umfaßt, die geeignet sind, die Sendemittel (10, 30) zu steuern, um das Signal (SIG_{R}, SIG_{IO}) bei Erfassen einer Bewegung der Karte (40) zu senden.

3. Karte mit Mikroschaltkreis nach Anspruch 1 oder 2, **dadurch gekennzeichnet, daß** die Karte (40) der Norm ISO 7816 entspricht und daß die Leitung (I/O) eine Eingabe-/Ausgabeleitung gemäß der Norm ISO 7816-3 ist.

4. Karte mit Mikroschaltkreis nach Anspruch 3, **dadurch gekennzeichnet, daß** die Sendemittel (10, 30) dazu ausgelegt sind, die Eingabe-/Ausgabeleitung (I/O) während einer Dauer, die strikt geringer als eine elementare Zeiteinheit (etu) im Sinne der Norm ISO 7816-3 ist, in einen bestimmten Zustand (A) zu zwingen, um der externen Vorrichtung (100) anzuzeigen, daß sie mit ihr kommunizieren möchte.

5. Karte mit Mikroschaltkreis nach Anspruch 4, **dadurch gekennzeichnet, daß** die Sendemittel (10, 30) dazu ausgelegt sind, die Eingabe-/Ausgabeleitung während einer Dauer, die geringer als das 0,8-fache der elementaren Zeiteinheit (etu) ist, vorzugsweise während einer Dauer, die etwa gleich dem 0,5-fachen der elementaren Zeiteinheit (etu) ist, in den bestimmten Zustand zu zwingen.

6. Karte mit Mikroschaltkreis nach Anspruch 1 oder 2, **dadurch gekennzeichnet, daß** die Karte (40) der Norm ISO 7816 entspricht und daß die Leitung (RST) eine RST-Kontaktleitung gemäß der Norm ISO 7816-3 ist.

7. Karte mit Mikroschaltkreis nach Anspruch 6, **dadurch gekennzeichnet, daß** die Sendemittel (10, 30) dazu ausgelegt sind, die RST-Kontaktleitung während einer Dauer, die strikt geringer als die durch die Norm ISO 7816-3 genormte Dauer des RESET ist, vorzugsweise während einer Dauer von etwa gleich 100 Takten eines außerhalb der Karte befindlichen Taktgebers, in einen bestimmten Zustand zu zwingen.

8. Karte mit Mikroschaltkreis nach Anspruch 6 oder 7, **dadurch gekennzeichnet, daß** sie umfaßt:
- Mittel (20) zum Trennen des Eingangs der RST-Kontaktleitung, wenn sie die RST-Kontaktleitung in den bestimmten Zustand zwingt, und
- Mittel zum Reagieren auf ein RST-Signal mit einer geringeren Dauer als die genormte Dauer, verringert um die Dauer, während derer die Sendemittel die RST-Kontaktleitung in den bestimmten Zustand zwingen.

9. Karte mit Mikroschaltkreis nach einem der Ansprüche 1 bis 8, **dadurch gekennzeichnet, daß** sie Mittel (10, 30) umfaßt, um der externen Vorrichtung anzuzeigen, daß sie die Fähigkeit zum Senden des Signals besitzt.

10. Karte mit Mikroschaltkreis nach Anspruch 9, **dadurch gekennzeichnet, daß** sie Mittel (10, 30) zum Senden einer Antwort (R1) vom Typ ATR gemäß der Norm ISO 7816-3 umfaßt, wobei die Antwort (R1) eine Information umfaßt, die dafür repräsentativ ist, daß die Karte die Fähigkeit zum Senden des Signals besitzt.

11. Karte mit Mikroschaltkreis nach Anspruch 9, **dadurch gekennzeichnet, daß** sie Mittel (10, 30) umfaßt, um auf einen APDU-Befehl gemäß der Norm ISO 7816-3 zu antworten, wobei die Antwort eine Information umfaßt, die dafür repräsentativ ist, daß die Karte die Fähigkeit zum Senden des Signals (SIG_{R}, SIG_{IO}) besitzt.

12. Karte mit Mikroschaltkreis nach Anspruch 11, **dadurch gekennzeichnet, daß** sie Mittel (10) zum Abhören der Kommunikationsleitung (I/O, RST) und zum erneuten Senden des Signals (SIG_{R}, SIG_{IO}), wenn sie erfaßt, daß die Kommunikationsleitung (I/O, RST) besetzt ist, umfaßt.

13. Karte mit Mikroschaltkreis nach einem der Ansprüche 1 bis 12, **dadurch gekennzeichnet, daß** sie Mittel (10) zum Durchführen des PPS-Protokolls umfaßt, um der externen Vorrichtung (100) anzuzeigen, daß sie die Fähigkeit zum Senden des Signals (SIG_{R}, SIG_{IO}) besitzt.

14. Vorrichtung außerhalb einer Karte mit Mikroschaltkreis, umfassend:
- Mittel (101, 130) zum Empfangen eines Signals (SIG_{R}, SIG_{IO}) über eine Kommunikationsleitung, während einer Ruhezeit (FT), **dadurch gekennzeichnet, daß** das Signal eine Dauer hat, die strikt geringer ist als die Dauer der kürzesten signifikanten Information, die durch die externe Vorrichtung über die Kommunikationsleitung nach einem genormten Kommunikationsprotokoll zwischen der Karte und der externen Vorrichtung gesendet werden kann, und
- Mittel (101, 130), um bei Empfang des Signals (SIG_{R}, SIG_{IO}) einen Befehl (C3) zu senden, der die Karte zum Kommunizieren auffordert.

15. Vorrichtung nach Anspruch 14, **dadurch gekennzeichnet, daß** sie Mittel umfaßt, um einen APDU-Befehl gemäß der Norm ISO 7816-3, vorzugsweise vom Typ STATUS zu senden, um die Karte zum Kommunizieren aufzufordern.

16. Vorrichtung nach Anspruch 14 oder 15, **dadurch gekennzeichnet, daß** sie Mittel (101, 130) umfaßt, um der Karte mit Mikroschaltkreis anzuzeigen, daß sie die Fähigkeit zur Verarbeitung des Signals besitzt.

17. Vorrichtung nach Anspruch 16, **dadurch gekennzeichnet, daß** sie Mittel umfaßt, um einen APDU-Befehl (C1) gemäß der Norm ISO 7816-3 zu senden, wobei der Befehl (C1) eine Information umfaßt, die dafür repräsentativ ist, daß die Vorrichtung die Fähigkeit zur Verarbeitung des Signals besitzt.

18. Vorrichtung nach Anspruch 17, **dadurch gekennzeichnet, daß** sie Mittel zur Durchführung des PPS-Protokolls umfaßt, um der Karte mit Mikroschaltkreis anzuzeigen, daß sie die Fähigkeit zur Verarbeitung des Signals besitzt.

19. Kommunikationsverfahren, das von einer Karte mit Mikroschaltkreis durchgeführt werden kann, um mit einer externen Vorrichtung zu kommunizieren, umfassend einen Schritt (F50) zum Senden eines Signals (SIG_{R}, SIG_{IO}) an die externe Vorrichtung, über eine Kommunikationsleitung, während einer Ruhezeit (FT), um der externen Vorrichtung anzuzeigen, daß die Karte mit Mikroschaltkreis mit der externen Vorrichtung kommunizieren möchte, **dadurch gekennzeichnet, daß** das Signal eine Dauer hat, die strikt geringer ist als die Dauer der kürzesten signifikanten Information, die durch die externe Vorrichtung über die Kommunikationsleitung nach einem genormten Kommunikationsprotokoll zwischen der Karte und der externen Vorrichtung gesendet werden kann.

20. Kommunikationsverfahren, das von einer außerhalb einer Karte mit Mikroschaltkreis befindlichen Vorrichtung durchgeführt werden kann, um mit der Karte zu kommunizieren, umfassend:
- einen Schritt (E40) zum Empfangen eines Signals (SIG_{R}, SIG_{IO}) über eine Kommunikationsleitung, während einer Ruhezeit, **dadurch gekennzeichnet, daß** das Signal eine Dauer hat, die strikt geringer ist als die Dauer der kürzesten signifikanten Information, die durch die externe Vorrichtung über die Kommunikationsleitung nach einem genormten Kommunikationsprotokoll zwischen der Karte und der externen Vorrichtung gesendet werden kann, und
- einen Schritt (E60), um bei Empfang des Signals (SIG_{R}, SIG_{IO}) einen Befehl (C3) zu senden, der die Karte zum Kommunizieren auffordert.
